(19) Europäisches Patentamt
European Patent Office
Office européen des brevets

(11) Veröffentlichungsnummer: **0 215 470**
**B1**

(12) **EUROPÄISCHE PATENTSCHRIFT**

(45) Veröffentlichungstag der Patentschrift: **01.08.90**

(51) Int. Cl.$^5$: **C 08 G 77/06,** C 08 G 77/34

(21) Anmeldenummer: **86112770.2**

(22) Anmeldetag: **16.09.86**

(54) **Verfahren zum Stabilisieren von Organopolysiloxanen.**

(30) Priorität: **16.09.85 DE 3533028**

(43) Veröffentlichungstag der Anmeldung:
**25.03.87 Patentblatt 87/13**

(45) Bekanntmachung des Hinweises auf die Patenterteilung:
**01.08.90 Patentblatt 90/31**

(84) Benannte Vertragsstaaten:
**BE DE FR GB IT NL**

(56) Entgegenhaltungen:
**FR-A-2 312 526**
**US-A-2 990 419**
**US-A-4 460 726**
**US-A-4 564 693**

**WALTER NOLL "Chemie und Technologie der Silicone", 2. Auflage, 1965, Verlag Chemie, Weinheim/Bergstrasse;**

(73) Patentinhaber: **WACKER-CHEMIE GMBH**
**Prinzregentenstrasse 22**
**D-8000 München 22 (DE)**

(72) Erfinder: **Burkhardt, Jürgen, Dr. Dipl.-Chem.**
**Isenbreite 25**
**D-8261 Winhöring (DE)**
Erfinder: **Rauchberger, Werner**
**Burgsteig 28**
**D-8263 Burghausen (DE)**

**EP 0 215 470 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zum Stabilisieren von Organopolysiloxanen, welche durch Kondensation und/oder Äquilibrierung von Organosiliciumverbindung(en), die Si-gebundenen Sauerstoff enthalten, in Gegenwart von Phosphornitridchlorid(en) als Katalysator(en) hergestellt worden sind.

Organopolysiloxane, welche durch Kondensation und/oder Äquilibrierung von Organosiliciumverbindung(en), die Si-gebundenen Sauerstoff enthalten, in Gegenwart von Phosphornitridchlorid(en) hergestellt worden sind, verändern ihr Molekulargewicht und damit ihre Viskosität im Laufe der Lagerung, wenn die Phosphornitridchloride nicht nach der Reaktion desaktiviert werden. Beispielsweise aus US—A—3,398,176 ist es bekannt, Phosphornitridchlorid(e) durch Umsetzung mit 1 bis 1,5 Äquivalenten tertiäres Amin pro Äquivalent Chlor im Phosphornitridchlorid zu desaktivieren.

Aufgabe der Erfindung war es, Organopolysiloxane, die durch Kondensation und/oder Äquilibrierung von Organosiliciumverbindungen, die Si-gebundenen Sauerstoff enthalten, mit Phosphornitridchloriden als die Kondensation und/oder Äquilibrierung fördernden Katalysatoren erhalten worden sind und somit vor dem Stabilisieren Phosphornitridchloride bzw. deren die Kondensation und/oder Äquilibrierung von Organosiloxanen fördernde Umsetzungsprodukte enthalten, durch Umsetzung der genannten Phosphorverbindungen mit geruchsneutralen, preiswerten und wenig toxischen Materialien gegen Viskositätsänderungen zu stabilisieren. Eine weitere Aufgabe der Erfindung war es, die genannten Phosphorverbindungen, ihre Umsetzungs- und Desaktivierungsprodukte nahezu vollständig aus den erwähnten Organopolysiloxanen zu entfernen. Diese Aufgaben werden durch die vorliegende Erfindung dadurch gelöst, daß die genannten Phosphorverbindungen mit mindestens einem Oxid, Hydroxid oder Carbonat eines zwei- oder dreiwertigen Metalls, insbesondere Magnesium, Calcium, Strontium, Barium, Zink oder Aluminium, umgesetzt werden und der aus Metalloxid, Metallhydroxid, Metallcarbonat und/oder dessen bzw. deren Umsetzungsprodukte mit den genannten Phosphorverbindungen bestehende Feststoff anschließend von den Organopolysiloxanen abgetrennt wird.

Die Organopolysiloxane, die erfindungsgemäß gegenüber Viskositätsänderungen stabilisiert werden, sind vorzugsweise solche der allgemeinen Formel

$$AO(SiR_2O)_mA.$$

In dieser Formel bedeutet R gleiche oder verschiedene, einwertige, gegebenenfalls substituierte Kohlenwasserstoffreste oder Wasserstoff mit der Maßgabe, daß an jedes Siliciumatom, an das Wasserstoff unmittelbar gebunden ist, auch ein Kohlenwasserstoffrest gebunden ist, A Wasserstoff oder einen Rest der Formel

$$—SiR_aR'_{3-a},$$

wobei R die vorstehend dafür angegebene Bedeutung hat, R' ein einwertiger, über Sauerstoff an das Silicium gebundener, gegebenenfalls substituierter Kohlenwasserstoffrest und a 0, 1, 2 oder 3 ist, und m eine ganze Zahl im Wert von mindestens 4.

Obwohl durch derartige, häufig verwendete Formeln nicht dargestellt, können bis zu 5 Molprozent der Einheiten der Formel $SiR_2O$ durch andere, meist jedoch nur als mehr oder weniger schwer vermeidbare Verunreinigungen vorliegende Siloxaneinheiten, wie Einheiten der Formel $RSiO_{3/2}$, wobei R die oben dafür angegebene Bedeutung hat, oder $SiO_{4/2}$-Einheiten oder Monoorganosiloxaneinheiten der vorstehend angegebenen Formel und $SiO_{4/2}$-Einheiten ersetzt sein.

Beispiele für einwertige Kohlenwasserstoffreste R oder für SiC-gebundene Kohlenwasserstoffreste in den erfindungsgemäß zu stabilizierenden Organopolysiloxanen sind Alkylreste, wie der Methyl-, Ethyl-, n-Propyl-, Isopropyl-, n-Butyl- und sec.-Butylrest; Alkenylreste, wie der Vinyl- und Allylrest; Arylreste, wie der Phenylrest; Alkarylreste, wie Tolyl- und Xylylreste; und Aralkylreste, wie der Benzylrest.

Beispiele für einwertige, substituierte Kohlenwasserstoffreste R oder für SiC-gebundene, substituierte Kohlenwasserstoffreste in den erfindungsgemäß zu stabilisierenden Organopolysiloxanen sind Cyanalkylreste, wie der beta-Cyanethylrest, und halogenierte Kohlenwasserstoffreste, wie Halogenalkylreste, z.B. der 3,3,3-Trifluorpropylrest, und Halogenarylreste, z.B. o-, m- und p-Chlorphenylreste.

Wegen der leichteren Zugänglichkeit sind vorzugsweise mindestens 50% der Anzahl der SiC-gebundenen organischen Reste in den erfindungsgemäß zu stabilisierenden Organopolysiloxanen Methylreste. Die gegebenenfalls vorliegenden übrigen SiC-gebundenen organischen Reste sind vorzugsweise Vinyl- oder Phenylreste. Außerdem kann auch die Anwesenheit von Si-gebundenem Wasserstoff bevorzugt sein.

Beispiele für über Sauerstoff an das Silicium gebundene substituierte und unsubstituierte Kohlenwasserstoffreste R' sind der Methoxy-, Ethoxy- und der Methoxyethylenoxyrest ($CH_3OCH_2CH_2O—$), sowie durch Reste R substituierte Phenoxyreste.

Die Viskosität der Organopolysiloxane, gegenüber deren Änderung die Organopolysiloxane erfindungsgemäß stabilisiert werden können, beträgt meist 2 bis 10 000 mPa.s bei 25°C.

Die größte Bedeutung hat das erfindungsgemäße Verfahren für solche Organopolysiloxane der oben angegebenen Formel, worin A Wasserstoff oder ein Rest der Formel $—SiR_3$, wie der Trimethylsilyl- oder

Dimethylvinylsilylrest ist, oder ein Teil der A Wasserstoff bedeutet und die übrigen A Reste der Formel —$SiR_3$ bedeuten.

Es kann eine Art von Organopolysiloxan stabilisiert werden; es können aber auch Gemische aus mindestens zwei verschiedenen Arten von Organopolysiloxanen stabilisiert werden.

Bei den Phosphornitridchloriden, welche die Organopolysiloxane, die erfindungsgemäß gegenüber Viskositätsänderungen stabilisiert werden, enthalten, kann es sich um solche handeln, die durch Umsetzung von 400 Gewichtsteilen Phosphorpentachlorid mit 130 Gewichtsteilen Ammoniumchlorid hergestellt worden sind (vgl. z.B. "Berichte der Deutschen Chemischen Gesellschaft", 57. Jahrgang, 1924, Seite 1345), und/oder um solche handeln, welche durch Umsetzung von 2 Mol Phosphorpentachlorid mit 1 Mol Ammoniumchlorid erhältlich sind (vgl. z.B. US—A—3,839,388 Bevorzugt sind Phosphornitridchloride der letzteren Art.

Ob Organopolysiloxane, die durch Kondensation oder Äquilibrierung oder durch Kondensation und Äquilibrierung von Organosiliciumverbindungen, die Si-gebundenen Sauerstoff enthalten, mit Phosphornitridchloriden erhalten worden sind, vor dem Stabilisieren tatsächlich Phosphornitridchloride enthälten oder zusätzlich zu Phosphornitridchloriden oder anstelle von Phosphornitridchloriden deren die Kondensation oder Äquilibrierung oder die Kondensation und Äquilibrierung fördernde Umsetzungsprodukte mit z.B. Organopolysiloxan enthalten, ist nicht geklärt. Folglich kann auch die Art dieser Umsetzungsprodukte nicht angegeben werden. Das Vorliegen solcher Umsetzungsprodukte in Organopolysiloxanen, die durch Kondensation oder Äquilibrierung von Organosiliciumverbindungen, die Si-gebundenen Sauerstoff enthalten, mit Phosphornitridchloriden erhalten worden sind, vor dem Stabilisieren dürfte aber auch nicht völlig ausgeschlossen werden können.

Die Herstellung von Phosphornitridchloriden oder deren die Kondensation oder Äquilibrierung von Organopolysiloxanen fördernde Umsetzungsprodukte enthaltenden Organopolysiloxanen ist allgemein bekannt und beispielsweise in US—A—2,830,967, US—A—2,990,419, US—A—3,186,967, GB—A—10 49 188, US—A—3,398,176, US—A—3,706,775, US—A—3,652,711, CA—A—809 229, US—A—3,839,388 eingehend beschrieben.

Bei der Herstellung von Phosphornitridchloriden bzw. deren die Kondensation oder Äquilibrierung oder Kondensation und Äquilibrierung von Organopolysiloxanen fördernde Umsetzungsprodukte enthaltenden Organopolysiloxanen werden die Phosphornitridchloride vorzugsweise in Mengen von 0,001 bis 0,05 Gewichtsprozent, insbesondere von 0,002 bis 0,03 Gewichtsprozent, jeweils bezogen auf das Gesamtgewicht der Organosiliciumverbindungen, deren Kondensation und/oder Äquilibrierung gefördert werden soll, eingesetzt.

Bevorzugt als Oxide, Hydroxide bzw. Carbonate von zwei- bzw. dreiwertigen Metallen sind die der Metalle Magnesium, Calcium, Strontium, Barium, Zink und Aluminium, wie etwa Magnesiumoxid, Calciumoxid, Zinkoxid, Aluminiumoxid, Magnesiumcarbonat, Calciumcarbonat, Strontiumcarbonat, Bariumcarbonat, Zinkcarbonat, Magnesiumhydroxid, Calciumhydroxid, Zinkhydroxid und Aluminiumhydroxid.

Es ist dem Fachmann klar, daß es sich bei den genannten Oxiden nicht um hochgeglühte Oxide handeln kann, da diese äußerst reaktionsträge sind. Ebenso ausgeschlossen sind natürliche Hochtemperaturmodifikationen dieser Oxide, wie etwa Korund.

Es kann eine Art von Oxid, Hydroxid oder Carbonat eines zwei- oder dreiwertigen Metalls, es kann aber auch ein Gemisch eingesetzt werden, das mindestens zwei dieser Verbindungen enthält.

Das Oxid, Hydroxid und/oder Carbonat eines zwei- oder dreiwertigen Metalls wird insbesondere in Menge von 5 bis 100 Grammäquivalent, vorzugsweise von 10 bis 50 Grammäquivalent je Grammatom Phosphor eingesetzt. Vorzugsweise wird das erfindungsgemäße Verfahren bei 0°C bis 200°C, insbesondere bei Raumtemperatur bis 180°C, durchgeführt. Das erfindungsgemäße Verfahren kann beim Druck der umgebenden Atmosphäre, also z.B. bei 1020 hPa (abs.), oder bei höheren oder niedrigeren Drücken durchgeführt werden. Das erfindungsgemäße Verfahren kann absatzweise, halbkontinuierlich oder vollkontinuierlich durchgeführt werden.

Die im erfindungsgemäßen Verfahren eingesetzten Oxide, Hydroxide und/oder Carbonate zwei- und/ oder dreiwertiger Metalle reagieren mit den Phosphornitridchloriden bzw. mit deren Umsetzungsprodukten und adsorbieren die durch diese Reaktion entstandenen Produkte.

Nach dieser Reaktion werden die Feststoffe, d.h., die Oxide, Hydroxide und/oder Carbonate sowie die an sie gebundenen Reaktionsprodukte aus der Reaktion ersterer mit Phosphornitridchloriden bzw. deren Umsetzungsprodukten von den Organosiliciumverbindungen abgetrennt. Dieses kann beispielsweise durch Filtration oder Zentrifugation erfolgen. Die auf diese Weise behandelten Organopolysiloxane sind fast vollständig frei von Phosphornitridchlorid und dessen Folgeprodukten, was sich u.a. in den niedrigen elektrischen Leitfähigkeiten der so erhaltenen Organopolysiloxane äußert.

Die Behandlung der Phosphornitridchlorid bzw. dessen Umsetzungsprodukte enthaltenden Organopolysiloxane mit den genannten Oxiden, Hydroxiden und/oder Carbonaten wird je nach Menge eingesetzten Phosphornitridchlorids bzw. Menge an eingesetzten Oxiden, Hydroxiden und/oder Carbonaten während 0,5 h bis 2 Tagen, vorzugsweise während 1 h bis 1 Tag durchgeführt.

Um eine gute Verteilung der bei dem erfindungsgemäßen Verfahren verwendeten Stoffe ineinander zu gewährleisten, wird das Gemisch aus Phosphornitridchloride bzw. deren die Kondensation und/oder Äquilibrierung von Organopolysiloxanen fördernden Umsetzungsprodukte enthaltenden

Organopolysiloxanen und erfindungsgemäß verwendeter Oxide, Hydroxide oder Carbonate zwei- oder dreiwertiger Metalle vorzugsweise bewegt, beispielsweise in einem Planetenmischer, einem Doppelschneckenkneter oder einer Zahnradpumpe.

Die erfindungsgemäß stabilisierten Organopolysiloxane können für alle Zwecke verwendet werden, bei denen auch die nach den bisher bekannten Verfahren stabilisierten Organopolysiloxane eingesetzt werden konnten, z.B. als Fadengleitmittel, zur Herstellung von Organopolysiloxanelastomeren und zur Herstellung von klebrige Stoffe abweisenden Überzügen. Zusätzlich eignen sich die so stabilisierten Organopolysiloxane als Transformatorenöle, elektrisch isolierende Öle und als Ausgangsstoffe für elektrisch isolierenden Silikonkautschuk, z.B. zur Anwendung in der Elektrotechnik. Das in den nachfolgenden Beispielen verwendete Phosphornitridchlorid wurde hergestellt wie folgt:

Ein Gemisch aus 417 g (2 Mol) Phosphorpentachlorid und 53,5 g (1 Mol) Ammoniumchlorid in 1000 ml Tetrachlorethan wurde 12 h zum Sieden unter Rückfluß erwärmt. Aus der so erhaltenen hellgelben Lösung wurden bei 160°C und unter Erniedrigung des Druckes bis auf etwa 1,33 hPa (abs.) die flüchtigen Anteile entfernt. Als Rückstand verbleiben gelbliche Kristalle, die im wesentlichen aus der Verbindung der Formel

$$Cl_3PNPCl_2NPCl_3 \cdot PCl_6$$

bestehen.

Beispiel 1:

Zu 720 g eines α,ω-bis-Trimethylsiloxy-Polymethylhydrogensiloxans mit einer Viskosität von 25 mm²/s bei 25°C und 296 g eines α,ω - bis - Trimethylsiloxy - Polydimethylsiloxans mit einer Voskosität von 100 mm²/s bei 25°C wurden 0,2 ml einer 25 Gew.-%igen Lösung von Phosphornitridchlorid in Dichlormethan gegeben. Nach 8 h Rühren bei 80°C und einem Druck von 1020 hPa wurde der Ansatz halbiert, in die eine Hälfte (Probe A) 1 ml Triisononylamin zugegeben und 1 h bei Raumtemperatur gerührt. In die andere Hälfte (Probe B) der Reaktionsmischung wurden 3 g Magnesiumoxid (Hersteller: Firma Magnesium GmbH, Lüneburg) eingebracht und 1 h bei Raumtemperatur gerührt und anschließend filtriert.

Beide Proben besaßen die gleiche Viskosität (34 mm²/s bei 25°C) und den gleichen Gehalt an Si-gebundenem Wasserstoff (1,2 Gew.-%), sie unterschieden sich jedoch im spezifischen elektrischen Widerstand ρ und in dem durch Röntgenfluoreszenzanalyse (RFA) bestimmten Phosphorgehalt:

| | ρ [Ω · cm] | Phosphorbestimmung (RFA) |
|---|---|---|
| Probe A | $5 \cdot 10^{11}$ | positiv |
| Probe B | $8 \cdot 10^{12}$ | negativ. |

Während im "frischen" Magnesiumoxid kein Phosphor durch RFA nachzuweisen war, enthielt der abfiltrierte Feststoff durch RFA meßbare Mengen an Phosphor.

Beispiel 2:

Zu 1000 g eines α,ω - Dihydroxy - Polydimethylsiloxans mit einer Viskosität von 180 mm²/s bei 25°C und 125 g eines α,ω - Divinyl - Polydimethylsiloxans mit einer Viskosität von 30 mm²/s bei 25°C wurden 0,15 ml einer 25 Gew.-%igen Lösung von Phosphornitridchlorid gegeben. Nach 4 h Rühren bei 80°C und einem Druck von 5 bis 10 hPa wurde der

Ansatz halbiert, in die eine Hälfte (Probe C) 0,5 ml Trioctylamin gegeben und 2 h bei Raumtemperatur und 1010 hPa gerührt. In die andere Hälfte der Reaktionsmischung (Probe D) wurden 5 g Aluminiumoxid (Type: NO. 115-25; Hersteller: VAW-Vereinigte Aluminium-Werke AG, Bonn) eingetragen, 2 h bei Raumtemperatur und 1010 hPa gerührt und anschließend filtriert.

Beide Proben besaßen die gleiche Viskosität (880 mm²/s bei 25°C) und den gleichen Gehalt an Vinyldimethylsiloxygruppen (0,9 Mol-%).

| | ρ [Ω · cm] | Phosphorbestimmung (RFA) |
|---|---|---|
| Probe C | $6 \cdot 10^{12}$ | positiv |
| Probe D | $4 \cdot 10^{14}$ | negativ. |

Während im "frischen" Aluminiumoxid kein Phosphor durch RFA nachzuweisen war, enthielt der abfiltrierte Feststoff durch RFA meßbare Mengen an Phosphor.

**Patentansprüche**

1. Verfahren zum Stabilisieren von Organopolysiloxanen, die vor dem Stabilisieren

Phosphornitridchloride bzw. deren die Kondensation oder Äquilibrierung oder die Kondensation und Äquilibrierung von Organopolysiloxanen fördernde Umsetzungsprodukte enthalten, gegenüber Viskositätsänderungen durch Umsetzung der genannten Phosphorverbindungen mit anderen Verbindungen, dadurch gekennzeichnet, daß die genannten Phosphorverbindungen mit mindestens einem Oxid, Hydroxid oder Carbonat eines zwei- oder dreiwertigen Metalls umgesetzt werden und der aus Metalloxid, Metallhydroxid, Metallcarbonat und/oder dessen bzw. deren Umsetzungsprodukt(e) mit den genannten Phosphorverbindungen bestehende Feststoff anschließend von den Organopolysiloxanen abgetrennt wird.

2. Verfahren nach Anspruch 1, dadurch gekennzeichnet, daß Oxide, Hydroxide und/oder Carbonate der Metalle Magnesium, Calcium, Strontium, Barium, Zink und/oder Aluminium eingesetzt werden.

3. Verfahren nach Anspruch 1 oder 2, dadurch gekennzeichnet, daß Oxid, Hydroxid und/oder Carbonat in Mengen von 5 bis 100 Grammäquivalent je Grammatom Phosphor in den zur Herstellung der Organopolysiloxane eingesetzten Phosphornitridchloriden eingesetzt wird.

## Revendications

1. Procédé pour stabiliser contre des modifications de leur viscosité des polyorganosiloxanes qui, avant d'être stabilisés, contiennent des chlorures de phosphonitrile ou des produits de réaction de ces chlorures qui accélèrent la condensation ou l'équilibrage ou la condensation et l'équilibrage de polyorganosiloxanes, par réaction de ces composés du phosphore avec d'autres composés, procédé caractérisé en ce que l'on fait réagir les composés du phosphore avec un oxyde, un hydroxyde ou un carbonate d'un métal divalent ou trivalent ou plusieurs de ces composés à la fois, puis on sépare des polyorganosiloxanes la matière solide constituée de l'oxyde, de l'hydroxyde et/ou du carbonate de métal et/ou de leurs produits de réaction avec les composés du phosphore.

2. Procédé selon la revendication 1, caractérisé en ce que l'on utilise des oxydes, hydroxydes et/ou carbonates de magnésium, calcium, strontium, baryum, zinc et/ou aluminium.

3. Procédé selon la revendication 1 ou 2, caractérisé en ce que l'on ajoute aux chlorures de phosphonitrile employés pour préparer les polyorganosiloxanes de 5 à 100 équivalents/g de l'oxyde, de l'hydroxyde et/ou du carbonate par atome-g de phosphore.

## Claims

1. Process for the stabilization against changes in viscosity of organopolysiloxanes which, before stabilization, contain phosphonitrile chlorides or their reaction products which enhance the condensation or equilibration or the condensation and equilibration of organopolysiloxanes, by reacting the said phosphorus compounds with other compounds, characterized in that the said phosphorus compounds are reacted with at least one oxide, hydroxide or carbonate of a divalent or trivalent metal and the solid consisting of metal oxide, metal hydroxide, metal carbonate and/or its, or their reaction product(s) with the said phosphorus compounds, is subsequently separated from the organopolysiloxanes.

2. Process according to Claim 1, characterized in that oxides, hydroxides and/or carbonates of the metals magnesium, calcium, strontium, barium, zinc and/or aluminium are employed.

3. Process according to Claim 1 or 2, characterized in that oxide, hydroxide and/or carbonate is employed in amounts of 5 to 100 gramme equivalents per gramme atom of phosphorus in the phosphonitrile chlorides employed in the preparation of the organopolysiloxanes.